# FASCICULE DE BREVET EUROPEEN

(11) **EP 2 912 754 B1**
(45) Date de publication et mention de la délivrance du brevet: **04.08.2021**
(21) Numéro de dépôt: 13785548.2
(22) Date de dépôt: 11.10.2013
(51) Int. Cl.: H02K 1/28

(54) **PAQUET DE TOLES POUR EMMANCHEMENT SUR UNE PIECE CYLINDRIQUE**
METALLBLECHSTAPEL ZUR MONTAGE ÜBER EIN ZYLINDRISCHES TEIL
STACK OF METAL SHEETS FOR FITTING OVER A CYLINDRICAL PART

(30) Priorité: 25.10.2012 FR 1260154
(43) Date de publication de la demande: 02.09.2015
(73) Titulaire: Valeo Equipements Electriques Moteur, 94046 Créteil Cedex (FR)
(72) Inventeur: PALLESCHI, Frédéric, 94320 Thiais (FR); BOUSSICOT, Frédéric, 94000 Creteil (FR); LEGRANGER, Jérome, 94000 Creteil (FR); MATT, Jean-Claude, 21000 Dijon (FR); LUTUN, Jérémie, 94340 Joinville le Pont (FR)
(74) Mandataire: Ricard, Amandine
(86) Numéro de dépôt international: PCT/FR2013/052438
(87) Numéro de publication internationale: WO 2014/064362

(56) Documents cités:
- WO-A1-89/08941
- DE-A1-102006 046 231
- DE-A1-102009 047 485
- DE-B3-102008 038 726
- US-A1- 2011 081 263
- None

## Description

### DOMAINE TECHNIQUE DE L'INVENTION

L'invention concerne un paquet de tôles notamment un paquet de tôles pour une machine électrique tournante et plus particulièrement un paquet de tôles dans lequel est emmanché un arbre ou un moyeu de rotor.

L'invention trouve une application particulièrement avantageuse dans le domaine des machines électriques tournantes telles que les alternateurs, les alterno-démarreurs et les ralentisseurs électromagnétiques.

### ETAT DE LA TECHNIQUE

Il est connu de l'état de la technique par exemple du document WO 2007/003835, un alternateur ou un alterno-démarreur pour véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Cette machine comporte essentiellement un carter et, à l'intérieur de celui-ci, un rotor solidaire en rotation d'un arbre central de rotor et un stator annulaire qui entoure le rotor de manière coaxiale à l'arbre.

Un paquet de tôles est monté coaxialement sur l'arbre de rotor dans le carter, à l'intérieur du stator. Le paquet de tôles est formé d'un empilement axial de tôles qui s'étendent chacune dans un plan radial perpendiculaire à l'axe de l'arbre de rotor. Pour le montage sur l'arbre de rotor, chacune des tôles présente un orifice central de telle sorte que le paquet de tôles est troué axialement pour recevoir l'arbre de rotor. Ce paquet de tôles peut comporter dans le cas d'un rotor à pôles saillant, une âme centrale cylindrique et une répartition circonférentielle de bras saillants radialement à partir de l'âme.

Pour l'assemblage du paquet de tôles du rotor sur l'arbre du rotor, il est prévu d'emmancher un arbre cylindrique sur un alésage lisse du paquet de tôles. L'arbre est alors solidaire du paquet de tôles. Dans cette opération d'emmanchement, les efforts d'emmanchement peuvent être considérablement élevés.

L'effort d'emmanchement est maximal lorsque l'arbre est à sa tolérance maximale et le paquet de tôle à sa tolérance minimale. Une solution pour réduire les efforts d'emmanchement est de réduire le serrage maximal, c'est-à-dire de diminuer le diamètre maximal de l'arbre et d'augmenter le diamètre minimal de l'alésage. Cela étant, une telle solution réduit le couple transmissible entre le paquet de tôles et l'arbre du rotor.

Il est également possible de réduire les efforts d'emmanchement tout en conservant un couple transmissible suffisant en utilisant un arbre lisse présentant un diamètre très précis avec une précision meilleure que +/-10 micromètres. Une telle précision ne peut toutefois pas être obtenue avec un arbre tourné mais nécessite une étape de rectification supplémentaire.

Une autre alternative pour réduire les efforts d'emmanchement consiste à utiliser un moletage sur l'arbre. Ceci présente à nouveau l'inconvénient d'ajouter une étape d'usinage supplémentaire dans la réalisation de l'arbre.

Une dernière alternative est présentée en figure 1 de la demande de brevet EP 0803 962, où il est prévu de munir l'arbre moleté d'un moyeu lisse (référencé 31 sur la figure 1 de cette demande de brevet européenne) sur lequel est monté le paquet de tôles. Cela étant, d'une part cet agencement nécessite l'utilisation d'une pièce supplémentaire : un moyeu, d'autre part, pour limiter les efforts d'emmanchement tout en conservant un couple transmissible suffisant, il est nécessaire d'utiliser un moyeu présentant une précision de l'ordre de +- 10 micromètres.

Le document DE 10 2009 047485 décrit un moteur électrique, en particulier agissant comme un moteur électrique pour véhicules automobiles, comprenant un rotor et un arbre. Le rotor comprend ainsi au moins une ailette en forme de plaque reliée à l'arbre. L'ailette en forme de plaque comprend un trou de réception central dans une zone de fixation à travers lequel l'arbre se prolonge. L'ailette en forme de plaque présente des évidements d'allégement dans la zone de fixation permettant une déformation de l'ailette en forme de plaque.

Le document DE 10 2006 046231 décrit une machine électrique dont le rotor comprend une feuille qui présente des évidements intermédiaires amenés dans la feuille à proximité du contour intérieur avec une barre logée de manière élastique dans le sens radial qui subsiste entre les évidements respectifs et le contour intérieur.

Ces opérations pour canneler et rectifier l'arbre ou le moyeu peuvent s'avérer couteuses. Il existe donc un besoin pour un agencement entre un paquet de tôles et un arbre ou un moyeu qui permette sans opération d'usinage couteuse des efforts d'emmanchement limités et un couple transmissible suffisant. Par exemple, un paquet de tôles qui puisse être emmanché sur un arbre lisse simplement tourné présentant une précision de l'ordre de +- 30 micromètres.

### OBJET DE L'INVENTION

L'invention a notamment pour but de proposer une forme avantageuse du paquet de tôles pour un emmanchement sur une pièce cylindrique qui limitent les efforts d'emmanchement sur ladite pièce cylindrique tout en permettant une transmission d'un couple suffisant, c'est-à-dire ayant une valeur supérieur à un couple minimal.

A cette fin, l'invention concerne un paquet de tôles d'une machine électrique tournante, ledit paquet est doté d'un axe central et comprend des tôles ayant chacune une épaisseur et qui s'inscrivent chacune dans un disque, la section de chacune des tôles présente un orifice central de telle sorte que le paquet de tôles est troué axialement pour recevoir par emmanchement une pièce cylindrique ayant une portion de portée présentant une surface extérieure lisse, ladite portion de portée étant solidaire dudit paquet de tôles après emmanchement.

Selon l'invention, la périphérie de l'orifice central de la section d'au moins une des tôles du paquet de tôles présente une forme globalement circulaire centrée autour dudit axe et munie de saillies s'étendant vers ledit axe, lesdites saillies étant après emmanchement en contact avec la pièce cylindrique de manière à maintenir par serrage ladite pièce cylindrique et la section de ladite tôle du paquet de tôles comprend au moins une ouverture présentant une longueur dans une direction tangentielle de ladite tôle à une distance radiale d'une desdites saillies de l'orifice central de telle sorte que la bande de matière de la tôle située entre l'ouverture et la saillie de contact puisse se déformer.

L'association des saillies de contact, avec les ouvertures qui jouent le rôle de trous d'assouplissement, permet de réduire la surface de contact sur l'arbre tout en conférant de l'élasticité à la tôle. Une zone de déformation est ainsi localisée dans chacune des bandes de matière situées à la périphérie des saillies de contact. Ces bandes de matière ont une épaisseur égale à celle de la tôle. Ces bandes de matière déformables permettent de réduire les efforts lors de l'emmanchement tout en maintenant un serrage suffisant sur l'arbre après emmanchement. Ces bandes de matière déformables permettent également de rattraper les tolérances de précision de l'arbre et de l'orifice des paquets de tôles, de sorte que l'on puisse utiliser pour cet emmanchement par exemple un arbre tourné sans que d'autres étapes d'usinage ne soient nécessaires.

Ce montage permet également une meilleure tenue de la tôle aux contraintes de centrifugation à grande vitesse car il limite la précontrainte au repos de la tôle ainsi que la variation avec la vitesse de la pression de contact entre l'arbre et la tôle.

Selon un mode de réalisation, la longueur tangentielle de l'ouverture et la distance radiale sont telles que la déformation de la bande de matière est une déformation élastique ou élasto-plastique.

La déformation élastique permet à la bande de matière d'agir « comme un ressort », elle exerce une force élastique radiale sur l'arbre de manière à permettre de transmettre un couple suffisant entre l'arbre et le paquet de tôles. Dans le cas d'une déformation élasto-plastique, la composante plastique de la déformation permet de rattraper les tolérances de précisions de l'arbre et de l'orifice des paquets de tôles.

Selon un mode de réalisation, la pièce cylindrique est un arbre du rotor de la machine électrique tournante.

Selon un autre mode de réalisation, la pièce cylindrique est un moyeu du rotor de la machine électrique tournante.

Selon un autre mode de réalisation, la au moins une ouverture est un trou d'assouplissement de forme plus longue circonférentiellement que radialement.

Selon une caractéristique de ce mode de réalisation, le trou d'assouplissement est de forme oblongue.

Cette forme oblongue présente l'avantage d'être facile à réaliser tout en conférant une bonne résistance mécanique à la tôle.

Selon une caractéristique, les saillies de contact sont situées en face des ouvertures.

Selon une caractéristique, en face de chaque ouverture est située au moins une saillie de contact.

Ainsi, les ouvertures sont situées à une distance proche des saillies de contact. Cela permet de répartir uniformément les saillies de contact et les ouvertures autour de la pièce cylindrique à serrer. Par exemple, on peut disposer les ouvertures à une distance radiale la plus proche possible des saillies tout en évitant la rupture de la bande de matière.

Selon une caractéristique de ce mode de réalisation, la longueur tangentielle de la saillie de contact est comprise entre 0,1 et 1,5 fois la longueur tangentielle de l'ouverture située en face de ladite saillie de contact.

De manière avantageuse, la longueur tangentielle de la saillie de contact est comprise entre 0,1 et 0,7 fois la longueur tangentielle de l'ouverture.

De plus, les milieux des longueurs tangentielles de ladite saillie de contact et de ladite ouverture sont alignés avec un même rayon de l'orifice central. Dans cette configuration selon laquelle les milieux de la saillie et de l'orifice sont alignés avec le centre de l'orifice central, on obtient une utilisation optimale de la déformation élastique ou plastique de la bande de matière.

Selon une caractéristique, les ouvertures sont centrées sur un même cercle, concentrique avec celui de l'orifice central.

Selon une autre caractéristique, les saillies de contact ont des formes de dents ou de créneaux.

Selon l'invention, la tôle présente des trous destinés à recevoir des moyens de maintien du paquet de tôles, par exemple des vis, lesdits trous étant disposés de manière à coopérer avec les ouvertures pour assouplir ladite tôle.

Les trous destinés à recevoir des moyens de maintien peuvent également être utilisés pour augmenter encore l'effet du trou d'assouplissement et faciliter la définition de la tôle. On dispose en effet, avec ces trous de paramètres d'ajustement supplémentaires pour respecter notamment des critères de force d'emmanchement maximale et de couple minimal transmissible. Ces trous destinés à recevoir des moyens de maintien sont disposés de part et d'autre de chaque ouverture 441.

L'invention concerne en outre une machine électrique munie d'un stator et d'un rotor, ledit rotor comprenant un paquet de tôles tel défini ci dessus.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue en coupe axiale d'une machine électrique tournante selon l'état de la technique ;
Figure 2 : une vue en coupe axiale d'une partie d'une machine électrique tournante selon un mode de réalisation de l'invention ;
Figure 3 : une vue d'une des tôles du paquet de tôles selon un mode de réalisation de l'invention ;
Figure 4 : une vue d'un détail d'une des tôles du paquet de tôles selon un mode de réalisation de l'invention ;

Les éléments identiques, similaires ou analogues conservent la même référence d'une figure à l'autre.

### DESCRIPTION D'EXEMPLES DE REALISATION DE L'INVENTION

### Description d'exemples de réalisation de l'invention

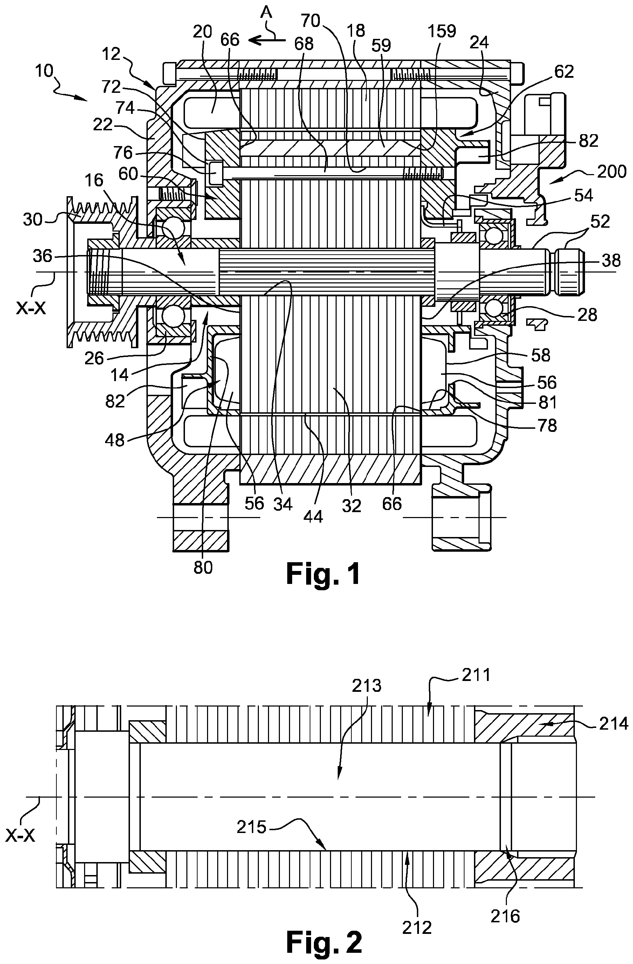

Dans la suite de la description, on adoptera à titre non limitatif une orientation axiale dirigée d'arrière en avant indiquée par la flèche "A" de la figure 1, et des orientations radiales perpendiculaires à l'orientation axiale.

Dans la suite de la description, des faces s'étendant dans un plan perpendiculaires à l'orientation axiale "A" seront qualifiées de faces radiales.

On a représenté à la figure 1 une machine tournante 10. La machine tournante 10 est par exemple un alternateur ou un alterno-démarreur. Cette machine 10 est de préférence destinée à être mise en œuvre dans un véhicule automobile. Un tel alterno-démarreur est décrit par exemple dans le document WO A 01/69762 auquel on se reportera pour plus de précisions.

Cette machine 10 comporte essentiellement un carter 12 et, à l'intérieur de celui-ci, un rotor 14 solidaire en rotation d'un arbre central de rotor 16 et un stator 18 annulaire qui entoure le rotor 14 de manière coaxiale à l'arbre 16 d'axe "X-X" constituant également l'axe du rotor 14.

Le stator 18 comporte un corps en forme d'un paquet de tôles doté d'encoches, par exemple du type semi-fermé, pour le montage d'un bobinage de stator 20 comportant plusieurs enroulements.

Ce bobinage de stator 20 comporte par exemple un jeu d'enroulements triphasé en étoile ou en triangle, dont les sorties sont reliées à un pont redresseur (non représenté) comportant des éléments redresseurs tels que des diodes ou des transistors du type MOSFET, notamment lorsque la machine 10 est du type réversible et consiste en un alterno-démarreur comme décrit par exemple dans le document FR A 2.745.445 (US A 6.002.219).

Les enroulements du bobinage de stator 20 sont obtenus à l'aide d'un fil continu, électriquement conducteur, revêtu d'une couche isolante et monté dans les encoches concernées du corps du stator 18.

Selon une variante non représentée, pour un meilleur remplissage des encoches du corps du stator 18, les enroulements 20 sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 20 comporte deux jeux d'enroulements triphasés pour former un dispositif d'enroulements composites de stator 18, les enroulements étant décalés de trente degrés électriques comme décrit par exemple dans les documents US A1 2002/0175589, EP 0.454.039 et FR A 2.784.248. Dans ce cas il est prévu deux ponts redresseurs et toutes les combinaisons d'enroulements triphasés en étoile et/ou en triangle sont possibles.

D'une manière générale l'alternateur est du type polyphasé et le ou les ponts redresseurs permettent notamment de redresser le courant alternatif produit dans les enroulements du stator 18 en un courant continu notamment pour charger la batterie (non représentée) du véhicule automobile et alimenter les charges et les consommateurs électriques du réseau de bord du véhicule automobile.

Comme illustré à la figure 1, l'arbre 16 du rotor 14 est monté à rotation autour de son axe "X-X" d'orientation axiale dans le stator 18 de la machine 10. L'espace entre le stator 18 et le rotor 14 définit un entrefer 44.

Le carter 12 est en au moins deux parties, à savoir un palier avant 22 et un palier arrière 24. Les paliers 22, 24 sont de forme creuse et portent chacun centralement un roulement à billes respectivement 26 et 28 pour le montage à rotation de l'arbre 16 du rotor 14.

Ici le carter 12 comporte une partie intermédiaire (non référencée) portant intérieurement le corps du stator 18. Cette partie intermédiaire est intercalée axialement entre les paliers 22, 24 dotés chacun d'une pluralité d'ouvertures (non référencées) pour ventilation interne de la machine grâce à au moins un ventilateur solidaire d'une des extrémités axiale du rotor. Dans le mode de réalisation de la figure 1 ce ventilateur comporte des pâles 82 solidaires d'un flasque 60, 62 de manière décrite ci-dessous.

L'arbre 16 du rotor 14 porte à son extrémité avant une poulie 30 qui est agencée à l'extérieur du carter 12. La poulie 30 appartient à un dispositif de transmission de mouvements par l'intermédiaire d'au moins une courroie (non représentée) entre l'alternateur et le moteur thermique du véhicule automobile.

Un paquet de tôles 32 est monté coaxialement sur l'arbre 16 de rotor 14 dans le carter 12, à l'intérieur du stator 18. Le paquet de tôles 32 est plus précisément monté solidaire en rotation de l'arbre 16. A cet effet, le paquet de tôles 32 comporte un trou 34 qui est emmanché à force sur un tronçon moleté de l'arbre 16.

Le paquet de tôles 32 est formé d'un empilement axial de tôles qui s'étendent dans un plan radial perpendiculaire à l'axe "X-X" de l'arbre de rotor 16. Ce paquet de tôles 32 forme le corps du rotor 14 et est en matière ferromagnétique.

Pour maintenir axialement les tôles formant le paquet de tôles 32, les flasques 60, 62 sont agencés axialement de part et d'autre du paquet de tôles 32 de manière que les faces radiales internes 66 des flasques 60, 62 soient en appui contre les faces radiales d'extrémité axiales externes 36, 38 du paquet de tôles 32, comme illustré à la figure 1.

Le rotor 14 comporte ici des aimants 59 qui sont montés dans des logements axiaux 159 du paquet de tôles 32.

Chaque bobinage d'excitation 48 est enroulé autour du paquet de tôles 32 de manière que des portions d'extrémités axiales 56 du bobinage d'excitation 48 font saillie axialement par rapport à chaque face radiales d'extrémité axiale externe 36, 38 du paquet de tôles 32, comme représenté à la figure 1. Ces portions en saillie seront par la suite appelées "chignons" 56. Plus particulièrement, la face radiale externe 58 de chaque chignon 56 est décalée axialement vers l'extérieur par rapport à la face radiale externe 36, 38 associée du paquet de tôles 32.

Les bobinages d'excitation 48 sont alimentés électriquement par un collecteur, qui comporte des bagues collectrices 52, qui sont agencées autour d'une extrémité arrière de l'arbre 16. Ce collecteur est par exemple réalisé par surmoulage de matière électriquement isolante sur des éléments électriquement conducteurs (non visibles) reliant les bagues 52 à un anneau (non référencé) relié électriquement par des liaisons filaires 54 aux extrémités du ou des bobinages d'excitation 48 du rotor 14.

Les bagues collectrices 52 sont alimentées électriquement par l'intermédiaire de balais (non représentés) qui appartiennent à un porte-balais et qui sont disposés de façon à frotter sur les bagues collectrices 52. Le porte-balais est généralement agencé dans le carter 12 et il est relié électriquement à un régulateur de tension.

Les flasques 60, 62 sont fixés l'un à l'autre par des tirants 68 d'orientation axiale, qui sont ici au moins au nombre de deux. A cet effet chaque flasque 60, 62 comporte quatre trous (non référencés) destinés à permettre le passage de chaque tirant 68. Le paquet de tôles comportent des trous 70 de manière que les tirants 68 puissent traverser axialement le paquet de tôles 32 depuis le flasque avant 60 jusqu'au flasque arrière 62. Les trous 70 du flasque 62 sont donc des trous de fixation.

La face radiale externe 72 du flasque avant 60 comporte ici des lamages 74 pour loger la tête 76 de chaque tirant 68. Les flasques 60, 62 sont en matière conductrice de chaleur. Les flasques sont par exemple métalliques.

Dans un mode de réalisation les flasques sont réalisés dans un matériau amagnétique tel que de l'aluminium, qui est une matière moulable et bonne conductrice de la chaleur.

Chaque flasque 60, 62 comporte aussi des logements 78 qui sont réalisés dans leur face radiale interne 66. Ces logements 78 sont destinés à recevoir des chignons saillants 56 des bobinages d'excitation 48 bobinés autour du paquet de tôles 32. Ici quatre logements 78 sont prévus. Les logements 78 sont répartis régulièrement circonférentiellement et alternent donc circonférentiellement avec des portions planes, qui appartiennent à la face interne 66 et permettent de maintenir les aimants 59.

Ici la machine électrique tournante est un alterno-démarreur et le flasque arrière 62 est configuré pour porter un porte-cible qui est destiné à permettre à des capteurs associés de détecter la position angulaire du rotor 14. Les capteurs sont portés par un porte-capteurs dont la position est réglable circonférentiellement. La lecture de la cible est ici radiale.

Le porte-cible avec sa cible et les capteurs solidaires d'un porte capteur appartiennent à des moyens 200 de suivi de la rotation du rotor comme décrit dans le document précité WO01/69762 auquel on se reportera pour plus de précisions. Bien entendu en variante le flasque 62 n'est pas configuré pour porter un porte-cible et la machine électrique tournante est un alternateur.

Ce flasque 62 comporte également des canaux pour des liaisons filaires 54 comme visible en partie à la figure 1.

Au moins un des logements 78 d'au moins un flasque 60, 62 comporte une surface de contact avec la face radiale externe 58 du chignon 56 associé, et les flasques 60, 62 sont réalisés dans un matériau conducteur de chaleur.

Comme représenté à la figure 1, les logements 78 des deux flasques 60, 62 comportent ici un fond 80. Ainsi, les deux chignons 56 d'un même bobinage d'excitation 48 sont adjacents aux fonds 80 de deux logements 78 opposés associés de chaque flasque 60, 62, qui permettent ainsi de bien évacuer la chaleur. Les chignons 56 peuvent être dans un mode de réalisation en contact direct avec les fonds 80. Ici les chignons 56 sont en contact avec les fonds 80 via une substance conductrice de chaleur.

Les flasques 60, 62, ici en aluminium, sont avantageusement réalisés en une unique pièce, par exemple par moulage. Les logements 78 consistent par exemple en des creusures. Dans le mode de réalisation représenté, les logements 78 ne débouchent que dans la face radiale interne 66 de chaque flasque 60, 62. Avantageusement, l'un des flasques 60, 62, ici le flasque arrière 62, comporte des orifices de remplissage 81 qui débouchent chacun dans le fond 80 d'un logement 78 associé.

Dans l'exemple représenté, la face radiale externe 72 de chaque flasque 60, 62 comporte des pâles 82 formant un ventilateur. Chaque pâle 82 s'étend axialement vers l'extérieur depuis la face radiale externe 72 du flasque associé 60, 62. Avantageusement, les pâles 82 sont réalisées venues de matière avec le flasque 60, 62 associé.

Selon l'état de la technique, l'arbre 16 est moleté et le paquet de tôles 32 est emmanché à force sur l'arbre. Le paquet de tôles 32 comporte un trou 34 formé par des orifices axiaux centraux de chacune des tôles. Ce trou permet l'emmanchement à force du paquet de tôles sur le tronçon moleté de l'arbre 16.

Cette réalisation présente des problèmes relatifs aux efforts pour emmancher l'arbre 16 dans le paquet de tôles 32 qui sont trop importants, notamment dans le cas où la machine tournante présente une longueur assez importante (de l'ordre de 85 mm par exemple).

La Figure 2 illustre une partie d'une machine électrique tournante munie d'un arbre de rotor 213, d'un paquet de tôles 211 et d'un axe X-X. Le paquet de tôles 211 présente par exemple une longueur de l'ordre de 85 mm. L'arbre 213 est un arbre qui ne comporte pas de tronçon moleté. L'arbre 213 comprend une portion de portée lisse 212 sur laquelle est emmanché le paquet de tôles 211. L'arbre 213 peut également comporter un épaulement 216. Le paquet de tôles 211 comporte un trou 215 pour son emmanchement à force sur la portion de portée lisse 212 de l'arbre 213. L'arbre 213 porte en outre un jonc troué 214 qui est relié à une des bagues du roulement (non visible sur la figure 2).

Chacune des tôles du paquet de tôles 21 présente une épaisseur de sorte que le paquet de tôles 211 s'étend axialement selon l'axe X-X. Par exemple, les épaisseurs de chacune des tôles formant le paquet de tôles sont sensiblement égales.

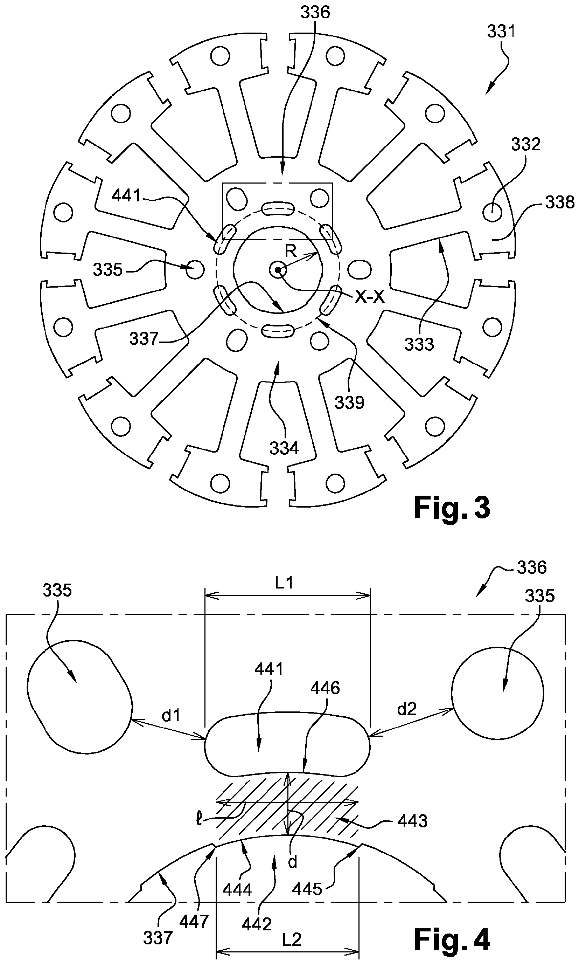

Pour maintenir axialement les tôles formant le paquet de tôles 211, en plus de flasques de part et d'autre du paquet de tôles 211, il est prévu des vis (non représentées) pour fixer les flasques sur le paquet de tôles 211. A cet effet, des trous 335 sont aménagés dans chacune des tôles tel qu'illustrés sur la figure 3. En variante, les flasques peuvent être fixés par des rivets ou des tirants tels que décrits dans la figure 1. Ces tirants ou ces rivets passent au travers des trous 335.

La figure 3 illustre une tôle 331 du paquet de tôles 211. La tôle 331 s'inscrit dans un disque. Elle présente une symétrie de révolution autour de l'axe X-X. En raison de sa forme telle qu'illustrée sur la figure 3, la tôle 331 est conformée pour un paquet de tôles destiné à être utilisé au sein d'une machine électrique ayant un rotor à pôle saillants. Cela étant, cette forme correspond à un mode de réalisation de sorte qu'une autre forme de tôle est possible. Par exemple une tôle conformée pour un paquet de tôles destiné à être utilisé au sein d'une machine électrique ayant un rotor à griffes.

Chacun des bras 333 correspond à un pôle sur lequel est bobiné un bobinage d'excitation. Chacun des bras 333 comprend un trou 332 destiné à recevoir une vis ou un tirant pour fixer des flasques sur le paquet de tôles 211. Chacun des bras comprend un rebord 338 qui s'étend circonférentiellement de part et d'autre du bras 333 pour assurer le maintien radial de la bobine d'excitation.

La tôle 331 comprend une partie centrale 334 dont la section est trouée pour former un orifice central axial 337 de forme globalement circulaire. Cet orifice central axial 337 présente selon un mode de réalisation un pourtour globalement circulaire centré sur l'axe X-X et de rayon R au niveau des saillies de contact 442 définies ci après.

Selon un mode de réalisation, une partie des trous 335 pour fixer des flasques présente une forme légèrement oblongue. Cela permet de faciliter l'introduction des derniers tirants. Par exemple, sur les six trous 335 de la tôle 331, trois présentent une forme oblongue.

La figure 4 illustre en détail une partie 336 de la tôle 331 illustrée sur la figure 3. Cette partie 336 comporte selon l'exemple deux trous 335 de formes différentes : un trou oblong et un trou circulaire.

La section de la partie centrale 336 présente au niveau de l'orifice axial central 337 une saillie 442. Cette saillie de contact 442 avec l'arbre 213 s'étend à l'intérieur du pourtour de l'orifice 337 de sorte que le rayon de l'orifice 337 est réduit au niveau de la saillie de contact 442.

La saillie présente par exemple une section en forme de créneau. Elle peut également présenter une forme de dent. Dans ces cas, elle comporte trois parties, une première partie 447 qui s'étend en direction de l'axe X-X, une deuxième partie circonférentielle 444 et une troisième partie 445 qui s'étend en direction opposée à l'axe X-X. La longueur tangentielle de la saillie 442 de la première 447 à la troisième 445 partie présente une longueur L2. La deuxième partie circonférentielle 444 est située à la distance R de l'axe X-X.

L'orifice 337 présente plusieurs saillies de contact 442 telles que décrites ci-dessus. L'arbre 213 est en contact uniquement avec les saillies de contact 442 de sorte que la surface de contact entre l'arbre 213 et le paquet de tôles 211 est réduit. Cela permet de limiter les efforts d'emmanchement sur l'arbre 213.

En d'autres termes, la forme de l'orifice 337 est alignée avec deux cercles concentriques. Un premier cercle de rayon légèrement supérieur à R qui est aligné avec des creux de l'orifice 337 et un deuxième cercle de rayon R qui est aligné avec la partie circonférentielle 444 des saillies de contact 442. L'orifice dont la forme s'inscrit dans deux cercles concentriques ayant une différence de rayon légère a donc une forme globalement circulaire.

Après emmanchement, la deuxième partie circonférentielle 444 des saillies 442 est serrée autour de l'arbre 213 sans que l'arbre 213 n'entre en contact avec la partie du pourtour de l'orifice axial central 337 non munie de saillies. Le serrage entre cette deuxième partie circonférentielle et l'arbre 213 est par exemple compris entre une valeur minimale de 28 micromètres et une valeur maximale 141 micromètres.

De manière avantageuse, l'arbre 213 n'est pas nécessairement un arbre amagnétique. En effet, les saillies de contact permettent une surface de contact réduite entre le paquet de tôles et l'arbre 213, de sorte que les fuites magnétiques par l'arbre 213 sont réduites. On doit juste choisir un arbre qui présente une résistance mécanique suffisante. L'arbre 213 peut donc être un arbre magnétique, amagnétique ou faiblement magnétique. On peut par exemple, utiliser un acier tel que défini ci après : -XC48H2q2TS suivant NFA 35563 et NFA 35552 sauf 0.70<%Mn<1.20. Un tel matériau présente une forte résistance et une bonne durabilité. Plus précisément, la dureté d'un tel arbre est : Dureté surface: 650-750HV0,5 ; Profondeur: 2,5mm +/- 0.5mm ; Dureté matière: <300HV0,5.

La partie centrale 334 de la tôle 331 comprend un orifice 441. Cet orifice présente une forme globalement plus longue circonférentiellement que large radialement. Selon un mode de réalisation, la forme de l'orifice 441 est oblongue. Cela étant, on peut utiliser n'importe quelle autre forme d'orifice du moment que la partie 446 du pourtour d'orifice 441 présente une longueur en face de la saillie 442. Par exemple, le pourtour du trou 441 peut présenter une forme de triangle ayant une base 446 située en face de la saillie 442 et de longueur L1 inférieure à celle de la longueur L2.

Le trou 441 est un trou d'assouplissement, il permet de définir entre la saillie 442 et la partie du pourtour 446, une bande de matière 443 de largeur radiale d, de longueur l et d'épaisseur égale à celle de la tôle 331. Plus précisément, la largeur radiale d correspond à la distance radiale entre la deuxième partie circonférentielle 444 d'une saillie 442 et la partie 446 du pourtour de l'orifice 441. La longueur l correspond à la longueur tangentielle de la bande de matière déformable située entre la saillie 442 et l'orifice 441. Cette longueur l est sensiblement inférieure au maximum entre les longueurs L1 et L2, l < max (L1, L2). Les dimensions de la bande de matière 443 sont définies pour respecter plusieurs critères.

Un premier critère est celui des contraintes exercées sur la bande de matière 443. Il faut définir les dimensions de la bande de matière 443 de telle sorte que les contraintes sur la bande de matière 443 soient inférieures à un seuil de rupture. Ce seuil de rupture dépend notamment du type de tôle 331 et de son épaisseur.

Un deuxième critère est celui des efforts d'emmanchement du paquet de tôles 211 sur l'arbre 213. Il faut définir les dimensions de la bande de matière 443 pour que l'on puisse emmancher le paquet de tôles sur l'arbre 213 sans exercer des efforts trop importants. En effet, lors de la fabrication, les robots d'assemblage utilisés ont une force d'emmanchement maximale de l'ordre de 8 à 9 tonnes. L'effort d'emmanchement doit donc être inférieur à cette force d'emmanchement maximale.

Un troisième critère est celui du couple minimal transmissible. Il faut définir les dimensions de la bande de matière 443 pour qu'un couple minimal soit transmissible du paquet de tôles 211 à l'arbre 213 et de l'arbre 213 au paquet de tôles 211. En effet, lors de son fonctionnement en démarreur ou en alternateur l'arbre 213 de la machine électrique doit d'une part recevoir un couple suffisant pour entrainer une poulie en mode démarreur et d'autre part entrainer le paquet de tôles pour qu'un courant induit soit crée dans le stator en mode alternateur. Le couple minimal transmissible pour un fonctionnement en alterno-démarreur est par exemple de 175 N.m.

On va décrire ci-après un procédé de définition des dimensions de la bande de matière pour respecter ces trois critères sur une plage de serrage correspondant au jeu acceptable (par exemple la plage de serrage mentionnée ayant une valeur minimale de 28 micromètres et une valeur maximale 141 micromètres). Selon ce procédé, on définit la bande de matière 443 telle qu'elle respecte pour le serrage minimal, les critères les plus difficiles à respecter avec un serrage minimal et pour le serrage maximal, les critères les plus difficiles à respecter avec un serrage maximal.

Ainsi, pour le serrage maximal (par exemple 141 micromètres), on va définir la bande de matière 443 de tel sorte que les critères d'effort d'emmanchement et de contraintes soient respectés. Pour cela, on va d'une part définir une longueur l minimale et une largeur d maximale pour respecter les critères d'effort d'emmanchement et d'autre part définir une longueur l maximale et une largeur d minimale pour respecter le critère de contraintes.

Puis, pour le serrage minimal (par exemple 28 micromètres), on va définir la bande de matière 443 de telle sorte que le critère de couple transmissible soit respecté. Pour cela, on va définir une longueur l maximale et une largeur d minimale.

On en déduit alors des intervalles minimaux et maximaux pour choisir la largeur d et la longueur l de la bande de matière 443.

Par ailleurs, les trous 335 peuvent également être utilisés pour augmenter encore l'effet du trou d'assouplissement 441 et faciliter la définition de la tôle remplissant les trois critères mentionnés ci-dessus sur l'ensemble de la plage de serrage (par exemple la plage de serrage mentionnée ayant une valeur minimale de 28 micromètres et une valeur maximale 141 micromètres). On dispose en effet, avec les trous 335 de paramètres d'ajustement supplémentaires, à savoir les distances d1 et d2 entre le trou d'assouplissement 441 et les trous 335, pour respecter les trois critères mentionnés ci-dessus.

On peut alors pour le serrage maximal (par exemple 141 micromètres), en plus des intervalles de longueur l et de largeur d mentionnés ci dessus, définir d'une part des distances d1 et d2 maximales pour le critère d'effort d'emmanchement et d'autre part des distances d1 et d2 minimales pour le critère de contraintes.

Et, on peut, pour le serrage minimal (par exemple 28 micromètres), pour respecter le critère de couple transmissible, définir en plus de la largeur d minimale et de la longueur l maximale, des distances d1 et d2 minimales.

On en déduit alors des intervalles minimaux et maximaux pour choisir la largeur d, la longueur l et les distances d1 et d2 de la bande de matière 443.

Selon un mode de réalisation, l'ensemble des trous 441 est situé sur un cercle 339 (visible sur la figure 3) concentrique avec le pourtour de l'orifice central axial 337.

L'association des saillies de contact, avec les trous d'assouplissement 441 et éventuellement les trous 335 permet de réduire la surface de contact sur l'arbre tout en conférant de l'élasticité à la tôle 331. Une zone de déformation élastique est ainsi localisée dans les bandes de matière 443 situées à la périphérie des saillies de contact 442, cette déformation élastique permettant de réduire les efforts d'emmanchement.

L'invention a donc également pour objet un procédé de définition d'une bande de matière 443 définie dans une tôle, entre une ouverture 441 et un orifice 337 muni de saillies 442, destiné à recevoir une pièce cylindrique comprenant les étapes suivantes :
- une première étape de définition des dimensions de la bande de matière 443 de tel sorte que les critères d'effort d'emmanchement et de contraintes soient respectés pour le serrage maximum entre la pièce cylindrique et les saillies de contact.
- une deuxième étape de définition des dimensions de la bande de matière 443 de tel sorte que le critère de couple transmissible entre la pièce cylindrique et le paquet de tôle équipé d'une multitude de tôle comprend un bande de matière 443 soit respecté pour le serrage minimum entre la pièce cylindrique et les saillies de contact.

Au cours de la première étape de définition, on va notamment définir une longueur l minimale et une largeur d maximale de la bande de matière 443 pour respecter les critères d'effort d'emmanchement et d'autre part définir une longueur l maximale et une largeur d minimale pour respecter le critère de contraintes. En outre, on peut également définir au cours de cette première étape de définition, d'une part des distances d1 et d2 maximales pour le critère d'effort d'emmanchement et d'autre part des distances d1 et d2 minimales pour le critère de contraintes, les distances d1 et d2 correspondant aux distances entre l'ouverture et deux trous d'assouplissement supplémentaires 335 sont situés de part et d'autre de l'ouverture 441.

Au cours de la deuxième étape de définition, on va notamment définir une longueur l maximale et une largeur d minimale de la bande de matière 443. En outre, on peut également définir au cours de cette deuxième étape de définition, des distances d1 et d2 minimales.

On peut alors en définissant convenablement la tôle par exemple en suivant le procédé de définition mentionné ci-dessus, respecter des critères d'efforts d'emmanchement maximal et de couple transmissible minimal plus exigeants qu'avec un emmanchement classique (arbre comportant un tronçon moleté emmanché sur un paquet de tôles), tout en utilisant un arbre lisse.

Un exemple de tôle définie en utilisant le procédé de définition ci-dessus appliqué à une tôle d'épaisseur 0,35 mm composé d'acier magnétique de type M330-35 A, est illustré ci-après. Cette tôle 331 comporte cinq ouvertures 441 et dix trous 335.

La longueur l obtenue est de 3,27 mm, la largeur d est de 2,76 mm, la distance d1 est de 2,6 mm et la distance d2 est de 3,25 mm pour une tôle 331 de rayon extérieur au niveau des bras 54,2 mm, de rayon de la partie centrale 334, 33,1 mm et de rayon de l'orifice central axial R = 10 mm. Une telle tôle permet avec un effort d'emmanchement inférieur à 9 tonnes, un couple transmissible supérieur à 175 N.m.

## Revendications

1. Paquet de tôles (211) d'une machine électrique tournante, ledit paquet est doté d'un axe central (X-X) et comprend des tôles (331) qui s'inscrivent chacune dans un disque, la section de chacune des tôles présente un orifice central (337) de telle sorte que le paquet de tôles est troué axialement (215) pour recevoir par emmanchement une pièce cylindrique (213) ayant une portion de portée (212) présentant une surface extérieure lisse, ladite portion de portée (212) étant solidaire dudit paquet de tôles (211) après emmanchement, la périphérie de l'orifice central (337) de la section d'au moins une des tôles du paquet de tôles présentant une forme globalement circulaire centrée autour l'axe (X-X) et munie de saillies (442) s'étendant vers ledit axe (X-X), lesdites saillies étant après emmanchement en contact avec la pièce cylindrique (213) de manière à maintenir par serrage ladite pièce cylindrique (213), la section de ladite tôle (331) du paquet de tôles (211) comprenant au moins une ouverture (441) présentant une longueur (L1) dans une direction tangentielle de ladite tôle (331) à une distance radiale (d) d'une desdites saillies (442) de l'orifice central (337) de telle sorte que la bande de matière (443) de la tôle (331) située entre l'ouverture (441) et la saillie de contact (442) puisse se déformer, **caractérisé en ce que** la tôle (331) présente des trous (335) destinés à recevoir des moyens de maintien du paquet de tôles, lesdits trous étant disposés de part et d'autre de chaque ouverture (441) de manière à coopérer avec lesdites ouvertures pour assouplir ladite tôle (331).

2. Paquet de tôles selon la revendication 1, dans lequel la longueur tangentielle (L2) de l'ouverture et la distance radiale (d) sont telles que la déformation de la bande de matière (443) est une déformation élastique ou élasto-plastique.

3. Paquet de tôles selon la revendication 1 ou 2, **caractérisé en ce que** la pièce cylindrique (213) est un arbre du rotor de la machine électrique tournante.

4. Paquet de tôles selon la revendication 1 ou 2, **caractérisé en ce que** la pièce cylindrique (213) est un moyeu du rotor de la machine électrique tournante.

5. Paquet de tôles selon l'une des revendications 1 à 4, **caractérisé en ce que** la au moins une ouverture (441) est un trou d'assouplissement de forme plus longue circonférentiellement que radialement.

6. Paquet de tôles selon la revendication 5, **caractérisé en ce que** le trou d'assouplissement (441) est de forme oblongue.

7. Paquet de tôles selon l'une quelconque des revendications 1 à 6, **caractérisé en ce que** les saillies de contact (442) sont situées en face des ouvertures (441).

8. Paquets de tôles selon la revendication 7, **caractérisé en ce que**, en face de chaque ouverture (441) est située au moins une saillie de contact (442).

9. Paquet de tôles selon la revendication 7 ou 8, **caractérisé en ce que** la longueur tangentielle (L2) de la saillie de contact (442) est comprise entre 0,1 et 1,5 fois la longueur tangentielle (L1) de l'ouverture (441) située en face de ladite saillie de contact (442).

10. Paquet de tôles selon la revendication 9, **caractérisé en ce que** la longueur tangentielle (L2) de la saillie de contact est comprise entre 0,1 et 0,7 fois la longueur tangentielle (L1) de l'ouverture (441).

11. Paquet de tôles selon la revendication 10, **caractérisé en ce que** les milieux des longueurs tangentielles de ladite saillie de contact (L2) et de ladite ouverture (L1) sont alignés avec un même rayon de l'orifice central (337).

12. Paquet de tôles selon l'une des revendications 1 à 11, **caractérisé en ce que** les ouvertures (441) sont centrées sur un même cercle (339), concentrique avec celui de l'orifice central (337).

13. Paquet de tôles selon l'une des revendications 1 à 12, **caractérisé en ce que** les saillies de contact (442) ont des formes de dents ou de créneaux.

14. Machine électrique munie d'un stator et d'un rotor, ledit rotor comprenant un paquet de tôles (211) tel que celui défini dans les revendications 2 ou 4 à 13 prises en combinaison avec la revendication 2.

## Patentansprüche

1. Blechpaket (211) einer rotierenden elektrischen Maschine, wobei das Paket mit einer mittleren Achse (X-X) versehen ist und Bleche (331) umfasst, die jeweils von einer Kreisscheibe umschrieben sind, wobei der Querschnitt jedes der Bleche eine mittlere Öffnung (337) aufweist, derart, dass das Blechpaket axial gelocht (215) ist, um mittels Schiebepassung ein zylindrisches Teil (213) aufzunehmen, das einen Lagerflächenabschnitt (212) hat, der eine glatte Außenfläche aufweist, wobei der Lagerflächenabschnitt (212) nach der Schiebepassung fest mit dem Blechpaket (211) verbunden ist, wobei der Umfang der mittleren Öffnung (337) des Querschnitts mindestens eines der Bleche des Blechpakets eine allgemein kreisförmige Form aufweist, die um die Achse (X-X) zentriert und mit Vorsprüngen (442) versehen ist, die sich zu der Achse (X-X) hin erstrecken, wobei die Vorsprünge nach der Schiebepassung mit dem zylindrischen Teil (213) in Kontakt sind, um das zylindrische Teil (213) durch Klemmen zu halten, wobei der Querschnitt des Blechs (331) des Blechpakets (211) mindestens eine Öffnung (441) aufweist, die in einer Tangentialrichtung des Blechs (331) in einem radialen Abstand (d) eines der Vorsprünge (442) von der mittleren Öffnung (337) eine Länge (L1) aufweist, so dass sich das Materialband (443) des Blechs (331), das zwischen der Öffnung (441) und dem Kontaktvorsprung (442) angeordnet ist, deformieren kann, **dadurch gekennzeichnet, dass** das Blech (331) Löcher (335) aufweist, die zur Aufnahme von Mitteln zum Halten des Blechpakets bestimmt sind, wobei die Löcher beiderseits jeder Öffnung (441) angeordnet sind, so dass sie mit den Öffnungen zum Lockern des Blechs (331) zusammenwirken.

2. Blechpaket nach Anspruch 1, wobei die Tangentiallänge (L2) der Öffnung und der radiale Abstand (d) derart sind, dass die Deformation des Materialbands (443) eine elastische oder elasto-plastische Deformation ist.

3. Blechpaket nach Anspruch 1 oder 2, **dadurch gekennzeichnet, dass** das zylindrische Teil (213) eine Welle des Rotors der rotierenden elektrischen Maschine ist.

4. Blechpaket nach Anspruch 1 oder 2, **dadurch gekennzeichnet, dass** das zylindrische Teil (213) eine Nabe des Rotors der rotierenden elektrischen Maschine ist.

5. Blechpaket nach einem der Ansprüche 1 bis 4, **dadurch gekennzeichnet, dass** die mindestens eine Öffnung (441) ein Lockerungsloch ist, dessen Form umfangsmäßig länger ist als radial.

6. Blechpaket nach Anspruch 5, **dadurch gekennzeichnet, dass** das Lockerungsloch (441) eine längliche Form hat.

7. Blechpaket nach einem der Ansprüche 1 bis 6, **dadurch gekennzeichnet, dass** die Kontaktvorsprünge (442) gegenüber den Öffnungen (441) angeordnet sind.

8. Blechpaket nach Anspruch 7, **dadurch gekennzeichnet, dass** gegenüber jeder Öffnung (441) mindestens ein Kontaktvorsprung (442) angeordnet ist.

9. Blechpaket nach Anspruch 7 oder 8, **dadurch gekennzeichnet, dass** die Tangentiallänge (L2) des Kontaktvorsprungs (442) zwischen dem 0,1- und dem 1,5-Fachen der Tangentiallänge (L1) der dem Kontaktvorsprung (442) gegenüberliegenden Öffnung (441) beträgt.

10. Blechpaket nach Anspruch 9, **dadurch gekennzeichnet, dass** die Tangentiallänge (L2) des Kontaktvorsprungs zwischen dem 0,1- und dem 0,7-Fachen der Tangentiallänge (L1) der Öffnung (441) beträgt.

11. Blechpaket nach Anspruch 10, **dadurch gekennzeichnet, dass** die Mitten der Kontaktvorsprungstangentiallänge (L2) und der Öffnungstangentiallänge (L1) auf denselben Radius der mittleren Öffnung (337) ausgerichtet sind.

12. Blechpaket nach einem der Ansprüche 1 bis 11, **dadurch gekennzeichnet, dass** die Öffnungen (441) auf denselben Kreis (339) zentriert sind, der mit dem der mittleren Öffnung (337) konzentrisch ist.

13. Blechpaket nach einem der Ansprüche 1 bis 12, **dadurch gekennzeichnet, dass** die Kontaktvorsprünge (442) zahn- oder zinnenförmig sind.

14. Elektrische Maschine, die mit einem Stator und einem Rotor versehen ist, wobei der Rotor ein Blechpaket (211) nach den Ansprüchen 2 oder 4 bis 13 in Kombination mit Anspruch 2 umfasst.

## Claims

1. Sheet stack (211) for a rotary electric machine, said stack having a central axis (X-X) and comprising sheets (331) which are each inscribed within a disc, the cross section of each of the sheets having a central orifice (337) such that the sheet stack is holed axially (215) in order to receive, by push-fitting, a cylindrical part (213) having a bearing portion (212) having a smooth outer surface, said bearing portion (212) being as one with said sheet stack (211) after push-fitting,
the periphery of the central orifice (337) of the cross section of at least one of the sheets of the sheet stack having an overall circular shape centred on the axis (X-X) and provided with projections (442) extending towards said axis (X-X), said projections being, after push-fitting, in contact with the cylindrical part (213) so as to hold said cylindrical part (213) by gripping, the cross section of said sheet (331) of the sheet stack (211) comprising at least one opening (441) having a length (L1) in a tangential direction of said sheet (331) at a radial distance (d) of one of said projections (442) of the central orifice (337) in such a way that the strip of material (443) of the sheet (331) located between the opening (441) and the contact projection (442) can deform, **characterized in that** the sheet (331) has holes (335) intended to receive means for holding the sheet stack, said holes being arranged on either side of each opening (441) so as to cooperate with said openings in order to increase the flexibility of said sheet (331).

2. Sheet stack according to Claim 1, wherein the tangential length (L2) of the opening and the radial distance (d) are such that the deformation of the strip of material (443) is an elastic or elastic-plastic deformation.

3. Sheet stack according to Claim 1 or 2, **characterized in that** the cylindrical part (213) is a shaft of the rotor of the rotary electric machine.

4. Sheet stack according to Claim 1 or 2, **characterized in that** the cylindrical part (213) is a hub of the rotor of the rotary electric machine.

5. Sheet stack according to one of Claims 1 to 4, **characterized in that** the at least one opening (441) is a flexibility-increasing hole that is longer circumferentially than radially.

6. Sheet stack according to Claim 5, **characterized in that** the flexibility-increasing hole (441) is oblong.

7. Sheet stack according to any one of Claims 1 to 6, **characterized in that** the contact projections (442) are located facing the openings (441).

8. Sheet stack according to Claim 7, **characterized in that**, facing each opening (441), there is at least one contact projection (442).

9. Sheet stack according to Claim 7 or 8, **characterized in that** the tangential length (L2) of the contact projection (442) is between 0.1 and 1.5 times the tangential length (L1) of the opening (441) located facing said contact projection (442).

10. Sheet stack according to Claim 9, **characterized in that** the tangential length (L2) of the contact projection is between 0.1 and 0.7 times the tangential length (L1) of the opening (441).

11. Sheet stack according to Claim 10, **characterized in that** the middles of the tangential lengths of said contact projection (L2) and of said opening (L1) are aligned with one and the same radius of the central orifice (337).

12. Sheet stack according to one of Claims 1 to 11, **characterized in that** the openings (441) are centred on one and the same circle (339), which is concentric with that of the central orifice (337).

13. Sheet stack according to one of Claims 1 to 12, **characterized in that** the contact projections (442) are tooth-shaped or notch-shaped.

14. Electric machine provided with a stator and a rotor, said rotor comprising a sheet stack (211) like that defined in Claims 2 or 4 to 13, considered in combination with Claim 2.
